# EUROPÄISCHE PATENTSCHRIFT

(11) **EP 4 140 283 B1**
(45) Veröffentlichungstag und Bekanntmachung des Hinweises auf die Patenterteilung: **18.03.2026**
(21) Anmeldenummer: 22173926.1
(22) Anmeldetag: 18.05.2022
(51) Int. Cl.: A01D 41/14, A01D 41/127

(54) **LANDWIRTSCHAFTLICHE MASCHINE MIT VORSATZGERÄT UND RÜCKFAHRKAMERA ZUR FEHLERERKENNUNG DES VORSATZGERÄTS**
AGRICULTURAL MACHINE WITH A HEADER AND A REVERSING CAMERA FOR FAULT DETECTION OF THE HEADER
MACHINE AGRICOLE AVEC UN ENGIN FRONTAL ET UNE CAMÉRA DE RECUL POUR LA DÉTECTION DE DÉFAUTS DE L'ENGIN FRONTAL

(30) Priorität: 26.08.2021 DE 102021122091
(43) Veröffentlichungstag der Anmeldung: 01.03.2023
(73) Patentinhaber: CLAAS Selbstfahrende Erntemaschinen GmbH, 33428 Harsewinkel (DE)
(72) Erfinder: Hinz, Patrick, 33428 Greffen (DE)
(74) Vertreter: CLAAS Gruppe

(56) Entgegenhaltungen:
- EP-A1- 3 145 290
- EP-A1- 3 747 248
- EP-A1- 3 987 913
- EP-B1- 2 545 761
- EP-B1- 3 409 097
- WO-A1-2019/232179

## Beschreibung

Die vorliegende Erfindung betrifft eine landwirtschaftliche Maschine mit einem Vorsatzgerät zum Bearbeiten einer landwirtschaftlichen Fläche und einem optischen Sensor zum Erfassen der bearbeiteten Fläche. Ein solcher Sensor erleichtert die Erkennung von Fehlern beim Bearbeiten der Fläche, so dass bei Auftreten eines Fehlers schnell und gezielt abgeholfen werden kann.

Landwirtschaftliche Maschinen dieser Art sind aus EP 2 545 761 B1 und DE 10 2014 201203 A1 bekannt. Insbesondere zeigt EP 2 545 761 B1 einen Mähdrescher, der als optischen Sensor eine unter einem Einzugskanal montierte Kamera aufweist. Eine solche Kamera ermöglicht die Überwachung von von dem Vorsatzgerät frisch bearbeiteten Teilen der landwirtschaftlichen Fläche, die im Betrieb durch den Einzugskanal einer direkten Beobachtung durch den Fahrer der Maschine entzogen sind. Diejenigen Teile der Fläche, die beiderseits des Einzugskanals für den Fahrer einsehbar bleiben, sind von der bodennahen Position der Kamera aus nur schlecht sichtbar. DE 10 2014 201203 A1 schlägt eine Drohne zum Überwachen des Stoppelbildes hinter einer landwirtschaftlichen Erntemaschine vor. Eine solche Drohne kann den Fahrer der Maschine nur dann entlasten, wenn sie vollautonom fliegt, ohne die Aufmerksamkeit des Fahrers in Anspruch zu nehmen. Derartige Drohnen sind gegenwärtig noch teuer. Gleichzeitig ist die Auswertung der von der Drohne gelieferten Bilder dadurch erschwert, dass nicht a priori feststeht, aus welcher Perspektive sie aufgenommen sind.

EP 3 409 097 B1 offenbart einen Feldhäcksler, bei dem eine am Auswurfkrümmer angeordnete Kamera für die Rückwärtsfahrt verwendet wird, um Objekte zu identifizieren und mögliche Kollisionen zu vermeiden. Dieselbe Kamera wird im Erntebetrieb dazu verwendet, den Überladestrom vom Feldhäcksler in ein Transportfahrzeug zu steuern.

Weitere landwirtschaftliche Maschinen sind aus EP 3 145 290 A1 und EP 3 747 248 A1 bekannt.

Eine Aufgabe der vorliegenden Erfindung ist, eine landwirtschaftliche Maschine mit Vorsatzgerät zu schaffen, bei dem das ordnungsgemäße Funktionieren des Vorsatzgeräts mit geringem Aufwand verifiziert bzw. sichergestellt werden kann.

Die Aufgabe wird mit einer landwirtschaftlichen Maschine gemäß Anspruch 1 gelöst.

Weitere bevorzugte Ausführungsformen werden durch die abhängigen Ansprüche definiert.

Rückfahrkameras sind bei vielen selbstfahrenden landwirtschaftlichen Maschinen vorgesehen, um ein sicheres Rückwärtsfahren auch dann zu ermöglichen, wenn ein Fahrer der Maschine direkt oder über Spiegel den Raum hinter der Maschine nur unter Schwierigkeiten oder unvollständig überblicken kann, und sind zu diesem Zweck an einem Ort der Maschine montiert, von dem aus sich ein guter Überblick über eine Fläche hinter der Maschine bietet. Wenn sich die Maschine im normalen Arbeitseinsatz vorwärts bewegt, wird die Rückfahrkamera für ihre ursprüngliche Aufgabe nicht benötigt und kann daher ohne jegliche Einbuße an Funktionalität und bei geringen Kosten zur Überwachung des Bearbeitungsergebnisses auf der bearbeiteten Fläche nutzbar gemacht werden.

Eine Bildverarbeitungseinheit ist erfindungsgemäß mit der Rückfahrkamera verbunden und eingerichtet sein, um anhand von Bildern der Rückfahrkamera das Vorliegen eines Fehlers bei der Bearbeitung der Fläche zu erkennen und bei Vorliegen eines Fehlers ein Fehlersignal auszugeben.

Auf Bearbeitungsfehler hin auszuwertende Bilder entstehen nur dann, wenn die landwirtschaftliche Maschine vorwärts fährt. Für eine Bildverarbeitungseinheit, die ansonsten dazu dient, mögliche Gefahren bei der Rückwärtsfahrt anhand der Bilder der Rückfahrkamera zu erkennen, ist bei Vorwärtsfahrt nichts zu tun; daher kann die Verarbeitungsleistung einer solchen Bildverarbeitungseinheit bei Vorwärtsfahrt zum Überwachen der bearbeiteten Fläche und Erkennen möglicher Bearbeitungsfehler genutzt werden, was wiederum dazu beiträgt, die Kosten der Implementierung der Erfindung auf ein Minimum zu begrenzen.

Erfindungsgemäß ist die Rückfahrkamera über eine Steuereinheit mit einem Bildschirm in der Fahrerkabine verbunden. Wenn dieser Bildschirm in einem normalen Betriebszustand, in dem kein Fehler bei der Bearbeitung der Fläche erkannt wird, Bilder zeigt, an deren Überwachung der Fahrer der Maschine ein hohes Interesse hat, dann kann davon ausgegangen werden, dass der Bildschirm laufend mit der gebotenen Aufmerksamkeit überwacht wird, so dass, wenn der Bildschirm in einen in einen Betriebszustand versetzbar ist, in dem er von der Rückfahrkamera aufgenommene Bilder der bearbeiteten Fläche anzeigt, der Fahrer dies kurzfristig bemerken und, wenn nötig, geeignete Maßnahmen treffen wird.

Die im normalen Betriebszustand auf diesem Bildschirm angezeigten Bilder können z.B. das Befüllen eines die landwirtschaftliche Maschine begleitenden Transportfahrzugs mit Erntegut zeigen. Quelle dieser Bilder kann eine Kamera sein, die an einem von der Maschine ausgehenden Rohrkrümmer angebracht ist, der sich während des Befüllens über eine Ladefläche des Transportfahrzeugs erstreckt. Dieselbe Kamera kann auch als Rückfahrkamera dienen.

Die Bildverarbeitungseinheit kann ferner eingerichtet sein, einen Ort der bearbeiteten Fläche, an dem ein Fehler vorliegt, in Bildern der Rückfahrkamera zu bestimmen und diesen Ort in den an den Bildschirm übermittelten Bildern der Rückfahrkamera den zu markieren. Dies erleichtert es dem Fahrer, zu überprüfen, ob die Einschätzung der Bildverarbeitungseinheit über das Vorliegen oder Nichtvorliegen eines Fehlers korrekt ist und ggf. sinnvolle Abhilfemaßnahmen festzulegen.

Erfindungsgemäß ist die Bildverarbeitungseinheit dazu eingerichtet, die Gewissheit, mit der ein Fehler vorliegt, zu beurteilen und den Grad der Gewissheit in den an den Bildschirm übermittelten Bildern anzuzeigen, z.B. in der Ort, an dem vermutlich der Fehler vorliegt, je nach Grad der Gewissheit unterschiedlich farbig markiert wird. So kann der Benutzer einen von der Bildverarbeitungseinheit mit geringer Gewissheit vermuteten Fehler nach kurzem Studium des angezeigten Bildes mit gutem Gewissen ignorieren, wenn er den Eindruck gewinnt, dass der Fehler nicht vorliegt, während eine höhere Gewissheit auf Seiten der Bildverarbeitungseinheit eine genaueres Studium des Bildes rechtfertigt und geeignete Abhilfemaßnahmen erfordern kann.

Kriterium für einen Fehler kann insbesondere die Länge von von dem Vorsatzgerät auf der bearbeiteten Fläche zurückgelassenen Stoppeln sein. Sind diese zu kurz, dann ist die Gefahr hoch, dass das Vorsatzgerät zusammen mit Erntegut auch Boden aufnimmt und das Erntegut dadurch verunreinigt wird. Andererseits erhöht eine zu große Länge der Stoppeln, insbesondere bei Mais, die Gefahr, dass sie Schädlingen als Winterunterschlupf dienen. Daher sollte die Bildverarbeitungseinheit eingerichtet sein, die Länge der Stoppeln anhand der Bilder der Rückfahrkamera zu beurteilen.

Ferner ist eine Steuereinheit für das Vorsatzgerät vorzugsweise eingerichtet, die Arbeitshöhe des Vorsatzgeräts anhand der Stoppellänge zu korrigieren.

Alternativ oder ergänzend kann die Bildverarbeitungseinheit eingerichtet sein, Schleifspuren des Vorsatzgeräts auf dem Boden zu erkennen. Diese können ebenfalls ein Anzeichen für eine generell zu geringe Höhe des Erntevorsatzes sein und durch Anheben des Vorsatzgeräts zu beseitigen sein. Schleifspuren können aber auch dann entstehen, wenn die Höhe des Vorsatzgeräts an sich richtig ist, dieses aber gegen eine isolierte Bodenerhebung stößt und sie vor sich herschiebt. Wenn sich dabei Bodenmaterial am Vorsatzgerät ansammelt, kann dies zum Steckenbleiben führen.

Abhilfe kann in einem solchen Fall dadurch geschaffen werden, dass die Steuereinheit eingerichtet ist, bei Erkennung von Schleifspuren durch die Bildverarbeitungseinheit die Arbeitshöhe des Vorsatzgeräts vorübergehend zu erhöhen. So kann das Vorsatzgerät das sich vor ihm aufstauende Material überwinden und anschließend den Betrieb in der ursprünglichen Höhe fortsetzen.

Ein weiterer Fehler, den die Bildverarbeitungseinheit erkennen können sollte, ist niedergedrücktes Erntegut. Ursache hierfür ist meist, dass der Zugang zu Messern an der Vorderkante durch ein Hindernis blockiert ist und die Halme des Ernteguts, anstatt die Messer zu erreichen, von dem Hindernis umgeworfen werden. Hier ist es im Allgemeinen nötig, den Betrieb der Maschine zu unterbrechen und das Hindernis zu beseitigen; deswegen ist die Steuereinheit vorzugsweise eingerichtet, bei Erkennung von niedergedrücktem Erntegut die Maschine anzuhalten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine erfindungsgemäße landwirtschaftliche Maschine in einer Seitenansicht;
- Fig. 2: die landwirtschaftliche Maschine in einer Draufsicht, und
- Fig. 3: ein von einer Rückfahrkamera der Maschine erzeugtes Bild; und
- Fig. 4: ein auf einem Bildschirm der Maschine angezeigtes Bild.

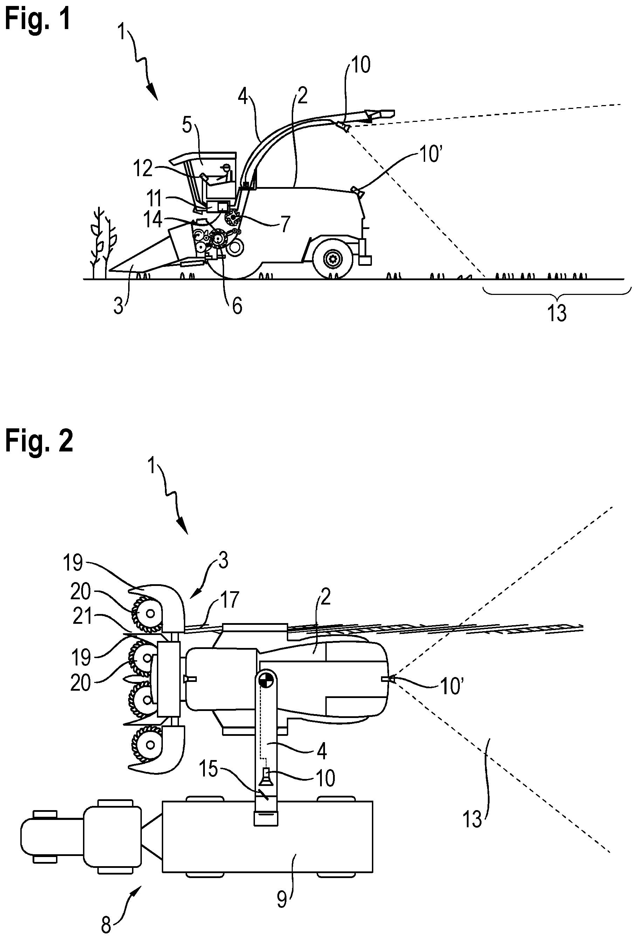

Fig. 1 und 2 zeigen in einer Seitenansicht und einer Draufsicht einen Feldhäcksler 1 als bevorzugtes Beispiel einer landwirtschaftlichen Maschine, an der die Erfindung anwendbar ist. Der Feldhäcksler hat eine starre Karosserie 2, an der ein Vorsatzgerät 3, typischerweise ein Maisgebiss, höhenverstellbar und ein Auswurfkrümmer 4 um eine vertikale Achse schwenkbar angebracht sind. Innerhalb der Karosserie 2, unterhalb einer Fahrerkabine 5, sind ein Häckselwerk 6 und ein Nachbeschleuniger 7 untergebracht. In an sich bekannter Weise dient ersteres zum Zerkleinern des vom Vorsatzgerät 3 zugeführten Ernteguts und letzterer zum Beschleunigen des so erhaltenen Häckselguts auf eine zum Durchlaufen des Auswurfkrümmers 4 erforderliche Geschwindigkeit.

Fig. 1 zeigt den Auswurfkrümmer 4 in einer nach hinten, entgegen der normalen Fahrtrichtung ausgestreckten Orientierung. In Fig. 2 ist der Auswurfkrümmer 4 um 90° zur Seite geschwenkt, um das Häckselgut auf eine Ladefläche 8 eines neben dem Feldhäcksler 1 fahrenden Begleitfahrzeugs 9 auszugeben.

Eine Rückfahrkamera 10 zur Überwachung des von der Fahrerkabine 5 aus schlecht oder gar nicht einsehbaren Raums hinter dem Feldhäcksler 1 ist einer ersten Ausgestaltung zufolge an dem Auswurfkrümmer 4 montiert. Die Rückfahrkamera 10 ist über eine Steuereinheit 11 mit einem Bildschirm 12 in der Fahrerkabine 5 verbunden. Die Steuereinheit 11 ist eingerichtet, wenigstens dann, wenn der Feldhäcksler 1 rückwärts fährt, Bilder von der Rückfahrkamera 10 auf dem Bildschirm 12 wiederzugeben.

Wenn der Feldhäcksler im Erntebetrieb vorwärts fährt, muss sich der Auswurfkrümmer 4 in einer zur Seite geschwenkten Stellung wie in Fig. 2 befinden, damit das Häckselgut kontinuierlich vom Feldhäcksler 1 zum Begleitfahrzeug 9 umgeladen werden kann. Damit die Rückfahrkamera 10 in diesem Betriebszustand eine abgeerntete Fläche 13 hinter dem Feldhäcksler 1 überwachen kann, kann sie ihrerseits schwenkbar am Auswurfkrümmer 4 montiert sein, um jeweils gegensinnig zum Auswurfkrümmer zu rotieren und unabhängig von dessen Schwenkstellung eine Blickrichtung nach hinten beibehalten zu können.

Einer ersten Alternative zufolge weist die Rückfahrkamera 10 einen so großen Blickwinkel auf, dass die Fläche 13hinter dem Feldhäcksler 1 auch dann noch in ihrem Blickfeld liegt, wenn sie am Auswurfkrümmer 4 unbeweglich montiert ist und der Auswurfkrümmer 4 wie in Fig. 2 gezeigt zur Seite geschwenkt ist. In diesem Fall zeigt der Bildschirm 12 nur jeweils einen Ausschnitt aus den von der Rückfahrkamera 10 aufgenommenen Bildern, wobei der Ausschnitt von der Steuereinheit 11 so festgelegt sein kann, das beim Rückwärtsfahren sowie beim Vorwärtsfahren im Erntebetrieb im Wesentlichen dieselbe Fläche 13 hinter dem Feldhäcksler 1 zu sehen ist.

Wenn bei dieser ersten Alternative der Auswurfkrümmer 4 sich in der Stellung der Fig.2 befindet, liegt auch ein wesentlicher Teil der Ladefläche 8 im Blickfeld der Rückfahrkamera 10, so dass diese auch zum Überwachen des Überladens zum Begleitfahrzeug 9 eingesetzt werden kann. Zu diesem Zweck unterstützt die Steuereinheit 11 zwei Betriebszustände des Bildschirms 12, einen ersten, in dem der vom Auswurfkrümmer 4 ausgeworfene Strahl von Häckselgut und dessen Auftreffort auf der Ladefläche 8 zu sehen ist, und einen zweiten, in dem die Fläche 13 hinter dem Feldhäcksler 1 zu sehen ist.

Da die Steuereinheit 11 jeweils das gesamte Bild der Rückfahrkamera 10 empfängt, ist eine Bildverarbeitungseinheit 14 der Steuereinheit 11 jederzeit in der Lage, den Teil des Bildes auszuwerten, in dem die Fläche 13 hinter dem Feldhäcksler 1 dargestellt ist.

Einer zweiten Alternative zufolge ist die Rückfahrkamera 10 zusammen mit dem Auswurfkrümmer schwenkbar, so dass, wenn der Auswurfkrümmer 4 wie in Fig. 2 zur Seite geschwenkt ist, das Blickfeld der Rückfahrkamera 10 mit geschwenkt ist und anstatt der Fläche hinter dem Feldhäcksler 1 die Ladefläche 8 dieses Blickfeld ausfüllt. Um dennoch eine Überwachung der Fläche hinter dem Feldhäcksler 1 zu ermöglichen, ist ein Spiegel 15 vorgesehen, der vor die Rückfahrkamera 10 geschwenkt werden kann, um deren Blick wieder auf die Fläche 13 hinter dem Feldhäcksler 1 zu lenken. Der Spiegel 15 kann zeitweilig vor der Rückfahrkamera 10 platziert werden, so dass deren Bilder abwechselnd den Häckselgutstrahl und die Fläche 13 hinter dem Feldhäcksler 1 zeigen; denkbar ist auch, dass der Spiegel, solange der Auswurfkrümmer 4 zur Seite geschwenkt ist, so platziert ist, dass jeweils in einem Teil des Blickfelds der Häckselgutstrahl und im anderen die Fläche hinter dem Feldhäcksler 1 zu sehen ist.

Einer dritten Alternative zufolge kann eine Rückfahrkamera 10'auch am Heck der Karosserie 2 montiert sein. Die Funktion der Kamera 10 am Auswurfkrümmer 4 kann dann auf das Überwachen des Häckselgutstroms beschränkt sein.

In jeder dieser Alternativen stehen während eines Erntevorgangs - ggf. nach geeigneter Platzierung des Spiegels - Bilder der Fläche hinter dem Feldhäcksler 1 jederzeit zur Verfügung. Diese Bilder werden von der Bildverarbeitungseinheit 14 in Echtzeit auf mögliche Fehler untersucht.

Beispiele für mögliche Fehler sind:
- die Länge von auf der Fläche zurückgebliebenen Stoppeln liegt unter einem unteren Grenzwert;
- die Länge der Stoppeln liegt über einem oberen Grenzwert;
- auf der Fläche befindet sich niedergedrücktes Erntegut;
- auf der Fläche sind Schleifspuren zu erkennen.

Wenn die Bildverarbeitungseinheit 14 einen Fehler erkennt, gibt sie ein Fehlersignal an die Steuereinheit 11 weiter, und diese löst daraufhin eine Abhilfemaßnahme aus. Der obere und untere Grenzwert sowie die bei einem gegebenen Fehler zu treffende Abhilfemaßnahme können vom Benutzer festlegbar sein.

Im Falle einer Unter- bzw. Überschreitung eines Grenzwerts kann die Abhilfemaßnahme darin bestehen, dass die Steuereinheit 11 die Höhe des Vorsatzgeräts 3 über dem Boden mit Hilfe eines Stellglieds 16 korrigiert, bis die Grenzwerte wieder eingehalten sind.

Eine solche Korrektur kann vollautomatisch, ohne Beteiligung des Fahrers, vorgenommen werden. Alternativ kann das Vorliegen des Fehlersignals dazu führen, dass die Bilder der Rückfahrkamera auf den Bildschirm durchgeschaltet werden, ggf. zusammen mit einem Hinweis auf die Richtung einer von der Steuereinheit 11 beabsichtigten Höhenkorrektur, und diese erst nach Genehmigung durch den Fahrer vorgenommen wird.

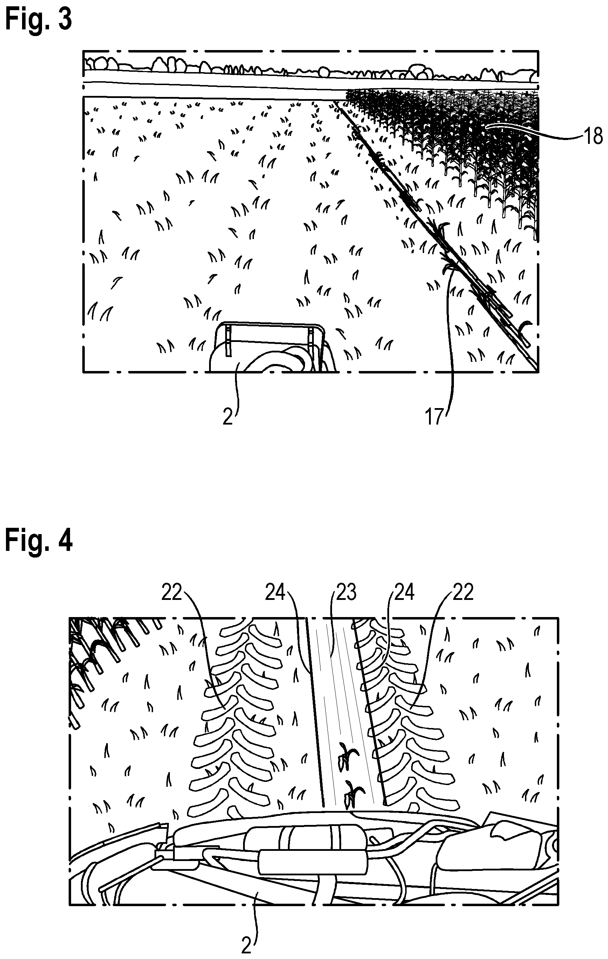

Fig. 3 zeigt ein Bild der Fläche hinter dem Feldhäcksler 1, aufgenommen von der Rückfahrkamera 10 am seitwärts von der Karosserie abstehenden Auswurfkrümmer 4. Ein Stück der Karosserie 2 ist am unteren Rand des Bildes zu erkennen. Ein Streifen 17 aus niedergedrückten Maispflanzen erstreckt sich zwischen der Karosserie 2 und dem Rand eines noch nicht abgeernteten Bestandes 18. Bei einem Vorsatzgerät 3 wie in Fig. 2 dargestellt, mit mehreren jeweils von Halmteilern 19 flankierten Rotoren 20, kann ein solches Fehlerbild zustande kommen, wenn ein Zwickel 21 zwischen einem Halmteiler 19 und einem benachbarten Rotor 20 durch Fremdmaterial blockiert ist und das Einziehen der Halme dort scheitert. In diesem Fall ist es notwendig, den Feldhäcksler 1 anzuhalten und das Fremdmaterial zu entfernen. Die von der Steuereinheit 11 getroffene Abhilfemaßnahme kann sich zunächst darauf beschränken, dass dem Fahrer das Vorliegen des Fehlers angezeigt wird. Alternativ oder wenn der Fahrer den angezeigten Fehler ignoriert, kann vorgesehen sein, dass die Steuereinheit 11 den Feldhäcksler 1 anhält, eventuell auch ein Stück zurücksetzt, um dem Fahrer das Erreichen des betroffenen Zwickels 21 zwischen der Vorderkante des Vorsatzgeräts 3 und dem Rand des noch nicht abgeernteten Bestands zu erleichtern, und/oder die Rotoren 20 kurze Zeit reversiert, um den Zwickel 21 von Erntegut zu befreien und das Fremdmaterial schnell zugänglich zu machen.

Fig. 4 zeigt ein Bild der Fläche hinter dem Feldhäcksler 1, aufgenommen von der Rückfahrkamera 10' am Heck des Feldhäckslers 1 und wiedergegeben auf dem Bildschirm 12. Beiderseits der Bildmitte erstrecken sich Reifenspuren 22; diese sind unvermeidlich und kein Hinweis auf einen Fehler; aufgrund ihres regelmäßigen Musters von Stollenabdrücken sind sie für die Bildverarbeitungseinheit 14 leicht zu identifizieren und als irrelevant auszuscheiden. Zwischen den Reifenspuren 22 erstreckt sich eine Schleifspur 23; sie ist für die Bildverarbeitungseinheit 14 an ihrer gleichmäßig langgestreckten Struktur zu erkennen. Grund für die Schleifspur kann ein einzelner Erdbrocken sein, an den das Vorsatzgerät 3 angestoßen ist und der in der Folge vom Vorsatzgerät 3 über die Bodenoberfläche ausgeschmiert wird. Wenn eine solche Schleifspur 23 erkannt wird, kann die Steuereinheit 11 sie beenden, indem das Vorsatzgerät 3 kurz mit Hilfe des Stellglieds 16 angehoben wird, bis die Reste des Erdklumpens hinter ihm liegen, und dann wieder abgesenkt wird.

Es kann vorgesehen werden, dass die Steuereinheit 11 eine solche Maßnahme bei Erkennung einer Schleifspur vollautomatisch, ohne Beteiligung des Fahrers, trifft. In diesem Fall ist es nicht nötig, die Bilder der Rückfahrkamera, in denen die Schleifspur erkannt wird, auf dem Bildschirm 12 anzuzeigen.

Alternativ kann die Erkennung einer Schleifspur durch die zunächst dazu führen, dass der Bildschirm 12 vom oben erwähnten ersten in den zweiten Betriebszustand umgeschaltet wird, d.h. dass die Bilder, die diese Schleifspur zeigen, auf den Bildschirm 12 durchgeschaltet werden. In den durchgeschalteten Bildern fügt die Bildverarbeitungseinheit 14 jeweils eine Markierung 24 des als Schleifspur interpretierten Bildbereichs hinzufügt. Die Markierung 23 umfasst hier zwei Linien, die beiderseits der Schleifspur 23 in einem Abstand von dieser verlaufen, um sie selber nicht zu verdecken und so dem Fahrer eine eigene Interpretation des Bildinhalts zu ermöglichen.

Die Farbe der Markierung 24 auf dem Bildschirm 12 kann dazu dienen, dem Fahrer die Verlässlichkeit der Einschätzung durch die Bildverarbeitungseinheit 14 zu signalisieren. Je genauer der markierte Bildbereich den der Bildverarbeitungseinheit 14 vorgegebenen Kriterien für eine Schleifspur entspricht, umso höher wird die Verlässlichkeit angesetzt. Wenn diese zwar eine erste, niedrige Schwelle überschreitet, die erforderlich ist, damit überhaupt das Fehlersignal erzeugt und der Bildschirm 12 in den zweiten Betriebszustand versetzt wird, aber unter einer zweiten, höheren Schwelle bleibt, erscheint die Markierung z.B. in Gelb, wohingegen sie bei Überschreitung der zweiten Schwelle in Rot erscheint. Andere Möglichkeiten, die Verlässlichkeit der Beurteilung oder die Dringlichkeit einer Abhilfemaßnahme zu signalisieren, sind die Verwendung von unterschiedlichen Helligkeiten oder Linienbreiten der Markierung 24 oder das Umschalten zwischen andauernder und blinkender Darstellung.

Anhand der auf dem Bildschirm 12 angezeigten Bilder kann der Fahrer das Problem beurteilen und selber entscheiden, ob und ggf. welche Abhilfemaßnahme zweckmäßig ist. Tut er dies in einer vorgegebenen Zeit nicht, dann vorgesehen sein, dass die Steuereinheit 11 automatisch eine Abhilfemaßnahme trifft. Die Abhilfe kann wie oben beschrieben ein zeitweiliges Anheben des Vorsatzgeräts 3 umfassen; wenn Fehler häufig auftreten, z.B. weil die Schleifspur nicht auf einzelne Erdbrocken sondern auf eine langgestreckte Bodenwelle zurückgeht, kann die Abhilfe auch darin bestehen, dass der Feldhäcksler 1 angehalten wird, um den Fahrer zu veranlassen, das Problem zu untersuchen und es nachhaltig zu beheben.

### Bezugszeichen

- 1: Feldhäcksler
- 2: Karosserie
- 3: Vorsatzgerät
- 4: Auswurfkrümmer
- 5: Fahrerkabine
- 6: Häckselwerk
- 7: Nachbeschleuniger
- 8: Ladefläche
- 9: Begleitfahrzeug
- 10: Rückfahrkamera
- 11: Steuereinheit
- 12: Bildschirm
- 13: Fläche
- 14: Bildverarbeitungseinheit
- 15: Spiegel
- 16: Stellglied
- 17: Streifen
- 18: Bestand
- 19: Halmteiler
- 20: Rotor
- 21: Zwickel
- 22: Reifenspur
- 23: Schleifspur
- 24: Markierung

## Patentansprüche

1. Landwirtschaftliche Maschine (1) mit einer Fahrerkabine (5), einem in der Fahrerkabine (5) angeordneten Bildschirm (12) und einer Steuereinheit (11), einem Vorsatzgerät (3) zum Bearbeiten einer landwirtschaftlichen Fläche und einem als Rückfahrkamera (10), 10') ausgebildeten optischen Sensor zum Erfassen des von der Fahrerkabine (5) aus schlecht oder gar nicht einsehbaren Raums hinter der landwirtschaftlichen Maschine (1), wobei die Rückfahrkamera (10) über die Steuereinheit (11) mit dem Bildschirm (12) in der Fahrerkabine (5) verbunden ist und die Steuereinheit (11) weiter eingerichtet ist, dann, wenn die landwirtschaftliche Arbeitsmaschine (1) rückwärts fährt, Bilder von der Rückfahrkamera (10) auf dem Bildschirm (12) wiederzugeben, wobei die Rückfahrkamera (10, 10') ausgebildet und eingerichtet ist im Erntebetrieb die bearbeitete Fläche (13) bezogen auf die Fahrtrichtung der Maschine (1) hinter dieser zu erfassen wobei eine Bildverarbeitungseinheit (14), die mit der Rückfahrkamera (10, 10') verbunden und eingerichtet ist, anhand von Bildern der Rückfahrkamera (10, 10') das Vorliegen eines Fehlers bei der Bearbeitung der Fläche (13) zu erkennen und bei Vorliegen eines Fehlers ein Fehlersignal auszugeben, **dadurch gekennzeichnet, dass** die Bildverarbeitungseinheit (14) eingerichtet ist, die Gewissheit, mit der ein Fehler vorliegt, zu beurteilen und den Grad der Gewissheit in den an den Bildschirm (12) übermittelten Bildern anzuzeigen.

2. Landwirtschaftliche Maschine nach Anspruch 1, **dadurch gekennzeichnet, dass** ein Bildschirm (12) der Maschine (1) mit der Rückfahrkamera (10, 10') verbunden ist und durch das Fehlersignal in einen Betriebszustand versetzbar ist, in dem er von der Rückfahrkamera (10, 10') aufgenommene Bilder der Fläche (13) anzeigt.

3. Landwirtschaftliche Maschine nach Anspruch 2, **dadurch gekennzeichnet, dass** die Bildverarbeitungseinheit (14) eingerichtet ist, einen Ort, an dem ein Fehler vorliegt, in Bildern der Rückfahrkamera (10, 10') zu bestimmen und in den an den Bildschirm übermittelten Bildern der Rückfahrkamera den Ort des Fehlers durch eine Markierung (24) zu kennzeichnen.

4. Landwirtschaftliche Maschine nach einem der Ansprüche 1 bis 3, **dadurch gekennzeichnet, dass** die Bildverarbeitungseinheit (14) eingerichtet ist, die Länge von von dem Vorsatzgerät (3) auf der bearbeiteten Fläche (13) zurückgelassenen Stoppeln zu beurteilen.

5. Landwirtschaftliche Maschine nach Anspruch 4, **gekennzeichnet durch** eine Steuereinheit (11), die eingerichtet ist, die Arbeitshöhe des Vorsatzgeräts (3) anhand der Stoppellänge zu korrigieren.

6. Landwirtschaftliche Maschine nach einem der Ansprüche 1 bis 5, **dadurch gekennzeichnet, dass** die Bildverarbeitungseinheit (14) eingerichtet ist, Schleifspuren (23) des Vorsatzgeräts (3) zu erkennen.

7. Landwirtschaftliche Maschine nach Anspruch 6, **gekennzeichnet durch** eine Steuereinheit (11), die eingerichtet ist, bei Erkennung von Schleifspuren (23) durch die Bildverarbeitungseinheit (14) die Arbeitshöhe des Vorsatzgeräts (3) vorübergehend zu erhöhen.

8. Landwirtschaftliche Maschine nach einem der Ansprüche 1 bis 7, **dadurch gekennzeichnet, dass** die Bildverarbeitungseinheit (14) eingerichtet ist, niedergedrücktes Erntegut zu erkennen.

9. Landwirtschaftliche Maschine nach Anspruch 8, **gekennzeichnet durch** eine Steuereinheit (11), die eingerichtet ist, bei Erkennung von niedergedrücktem Erntegut die Maschine (1) anzuhalten.

## Claims

1. Agricultural machine (1) having a driver's cab (5), a screen (12) located in the driver's cab (5), and a control unit (11), an attachment (3) for processing an agricultural area, and an optical sensor in the form of a rear view camera (10, 10') for capturing the space behind the agricultural machine (1) which is difficult to see or not visible at all from the driver's cab (5), wherein the rear view camera (10) is connected via the control unit (11) to the screen (12) in the driver's cab (5) and the control unit (11) is furthermore designed, whenever the agricultural machine (1) is reversing, to present images from the rear view camera (10) on the screen (12), wherein the reversing camera (10, 10') is configured and designed, in harvesting mode, to capture the processed area (13) behind the machine (1) relative to the direction of travel thereof, wherein an image processing unit (14) which is connected to the rear view camera (10, 10') and is designed to identify that there is an error in the processing of the area (13) using images from the rear view camera (10, 10') and to output an error signal when there is an error, **characterized in that**
the image processing unit (14) is designed to assess the certainty with which there is an error and to display the degree of certainty in the images transmitted to the screen (12).

2. Agricultural machine according to Claim **1, characterized in that** a screen (12) of the machine (1) is connected to the rear view camera (10, 10') and can be transferred by way of the error signal into an operating state in which it displays images of the area (13) taken by the rear view camera (10, 10').

3. Agricultural machine according to Claim 2, **characterized in that** the image processing unit (14) is designed to determine a location where there is an error in images from the rear view camera (10, 10') and to indicate the location of the error in the images from the rear view camera transmitted to the screen by way of a marking (24).

4. Agricultural machine according to any one of Claims 1 to 3, **characterized in that** the image processing unit (14) is designed to assess the length of stubble left behind by the attachment (3) on the processed area (13).

5. Agricultural machine according to Claim 4, **characterized by** a control unit (11) designed to correct the working height of the attachment (3) based on the stubble length.

6. Agricultural machine according to any one of Claims 1 to 5, **characterized in that** the image processing unit (14) is designed to identify trails (23) from the attachment (3).

7. Agricultural machine according to Claim 6, **characterized by** a control unit (11) designed to temporarily increase the working height of the attachment (3) upon identification of trails (23) by way of the image processing unit (14).

8. Agricultural machine according to any one of Claims 1 to 7, **characterized in that** the image processing unit (14) is designed to identify harvest crops that have been pushed down.

9. Agricultural machine according to Claim 8, **characterized by** a control unit (11) designed to stop the machine (1) upon identification of harvest crops that have been pushed down.

## Revendications

1. Machine agricole (1) dotée d'une cabine de conduite (5), d'un écran (12) installé dans la cabine de conduite (5) et d'une unité de commande (11), d'un engin frontal (3) destiné à travailler une surface agricole et d'un capteur optique réalisé sous forme de caméra de recul (10, 10') et destiné à détecter depuis la cabine de conduite (51) l'espace peu ou pas visible situé derrière la machine agricole (1), la caméra de recul (10) étant reliée à l'écran (12) dans la cabine de conduite (5), par l'intermédiaire de l'unité de commande (11), et l'unité de commande (11) étant en outre conçue pour reproduire des images de la caméra de recul (10) sur l'écran (12), lorsque la machine de travail agricole (1) recule, la caméra de recul (10, 10') étant agencée et conçue pour détecter, lors du service de récolte, la surface travaillée (13) par rapport au sens de déplacement de la machine (1), derrière celle-ci, une unité de traitement d'images (14), qui est reliée à la caméra de recul (10, 10'), étant conçue pour détecter la présence d'une erreur lors du travail de la surface (13), sur la base d'images de la caméra de recul (10, 10'), et pour émettre un signal d'erreur en cas de présence d'une erreur,
**caractérisée en ce que**
l'unité de traitement d'images (14) est conçue pour évaluer la certitude avec laquelle une erreur existe et pour indiquer le degré de certitude dans les images transmises à l'écran (12).

2. Machine agricole selon la revendication 1, **caractérisée en ce qu'**un écran (12) de la machine (1) est relié à la caméra de recul (10, 10') et peut être amené dans un état de fonctionnement par le signal d'erreur, dans lequel il affiche des images de la surface (13) enregistrées par la caméra de recul (10, 10').

3. Machine agricole selon la revendication 2, **caractérisée en ce que** l'unité de traitement d'images (14) est conçue pour déterminer un lieu où il existe une erreur dans des images de la caméra de recul (10, 10') et pour marquer le lieu de l'erreur par un repère (24) dans les images de la caméra de recul qui sont transmises à l'écran.

4. Machine agricole selon une des revendications 1 à 3, **caractérisée en ce que** l'unité de traitement d'images (14) est conçue pour évaluer la longueur des chaumes laissés par l'engin frontal (3) sur la surface travaillée (13).

5. Machine agricole selon la revendication 4, **caractérisée en ce qu'**elle comprend une unité de commande (11) qui est conçue pour corriger la hauteur de travail de l'engin frontal (3) sur la base de la longueur des chaumes.

6. Machine agricole selon une des revendications 1 à 5, **caractérisée en ce que** l'unité de traitement d'images (14) est conçue pour détecter des traces de frottement (23) de l'engin frontal (3).

7. Machine agricole selon la revendication 6, **caractérisée en ce qu'**elle comprend une unité de commande (11) qui est conçue pour augmenter temporairement la hauteur de travail de l'engin frontal (3), en cas de détection de traces de frottement (23) par l'unité de traitement d'images (14).

8. Machine agricole selon une des revendications 1 à 7, **caractérisée en ce que** l'unité de traitement d'images (14) est conçue pour détecter des produits à récolter couchés.

9. Machine agricole selon la revendication 8, **caractérisée en ce qu'**elle comprend une unité de commande (11) qui est conçue pour arrêter la machine (1) en cas de détection de produits à récolter couchés.
